# EUROPÄISCHE PATENTSCHRIFT

(11) **EP 0 534 199 B1**
(45) Veröffentlichungstag und Bekanntmachung des Hinweises auf die Patenterteilung: **15.01.1997**
(21) Anmeldenummer: 92115146.0
(22) Anmeldetag: 04.09.1992
(51) Int. Cl.: A01D 45/02, A01D 41/14

(54) **Maiserntegerät für Feldhäcksler**
Corn header for forage harvester
Outil de moisson de mais pour récolteuse hacheuse

(30) Priorität: 21.09.1991 DE 4131491
(43) Veröffentlichungstag der Anmeldung: 31.03.1993
(73) Patentinhaber: CLAAS SAULGAU GMBH, D-88340 Saulgau (DE)
(72) Erfinder: Arnold, Rudolf, W-7968 Saulgau (DE); Schulz, Wilfried, W-7968 Saulgau (DE)

(56) Entgegenhaltungen:
- EP-A- 0 131 853
- DE-A- 2 026 190
- DE-A- 3 233 122
- DE-C- 3 828 293
- DE-U- 8 534 503
- FR-A- 2 421 545

## Beschreibung

Die Erfindung bezieht sich auf ein Maiserntegerät für Feldhäcksler nach dem Gattungsbegriff des Anspruches 1.

Ein Maiserntegerät dieser Art ist zum Beispiel aus der Deutschen Patentschrift 32 33 122 bekannt. Da die Breite der Einzugswanne nach oben durch die gesetzlich festgelegte Maximal-Transportbreite gegeben ist, ergibt sich bei Maiserntegeräten mit 8 Förderkanälen oder mit 6 Förderkanälen für große Reihenabstände eine beträchtliche Spreizung der äußeren Förderkanäle. Bei großer Spreizung wird es aus konstruktiven und räumlichen Gründen aber unmöglich, die äußeren Förderkanäle in der dargestellten Weise nach oben zu klappen, weil Bauteile der nicht hochklappbaren und der hochklappbaren Förderkanäle kollidieren. Mit der Erfindung soll die Aufgabe gelöst werden, auch weit gespreizte Förderkanäle zum Straßentransport hochklappbar zu lagern.

Die Aufgabe wird erfindungsgemäß dadurch gelöst, daß der oder die hochklappbaren Förderkanäle oder Teile der hochklappbaren Förderkanäle und gegebenenfalls die mit diesen mitverschwenkbaren Förderkanäle an Hilfsrahmen gelagert sind, die ihrerseits über eine nach außen verlaufende Schlittenführung mit der Einzugswanne verbunden sind.

Eine zweckmäßige Ausgestaltung zur Lösung der gestellten Aufgabe ist in Anspruch 2 dargestellt, ohne darauf beschränkt zu sein.

Die Ansprüche 3 und 4 betreffen Ausgestaltungen der Erfindung, die insbesondere der Sicherheit der Konstruktion und Vereinfachung der Handhabung dienen.

Auch das Maiserntegerät nach Anspruch 5 geht von einem Stand der Technik aus, wie er sich aus der DE-PS 32 33 122 ergibt. Bei der hieraus bekannten Ausführung sind sechs Förderkanäle vorgesehen, von denen die jeweils äußeren Förderkanäle für eine Straßentransportstellung hochklappbar sind.

Die Aufgabe der mit diesem Anspruch 5 zum Schutz begehrten Erfindung besteht nun darin, ein Gerät mit einer bisher im Stand der Technik nicht praktizierten großen Arbeitsbreite vorzusehen, das auf einfache Weise in eine Transportstellung bringbar ist, in der die Übersicht des Fahrers auf die Straße nicht gehindert wird. Gemäß dieser Aufgabe ist zur Lösung vorgeschlagen, daß mehr als sechs Förderkanäle vorgesehen sind, von denen zumindest auf einer Endseite der Einzugswanne zwei äußere Förderkanäle um eine Achse hochschwenk- und feststellbar sind.

Aus der DE-PS 38 28 293 ist es bei einem Maiserntegerät mit in Arbeitrsstellung um vertikale Achsen umlaufenden Mäh- und Förderelementen bekannt, die äußeren Mäh- und Förderelemente an Tragarmen zu lagern, die für eine Transportstellung des Gerätes um aufwärts gerichtete Achsen in Fahrtrichtung nach vorne verschwenkbar sind. Für eine Entkupplung der Antriebselemente kann hierbei der äußere Tragarm mit dem zugehörigen Mäh- und Förderelement zuerst quer zur Fahrtrichtung nach außen verschwenkt werden, bevor er zusammen mit dem inneren Tragarm in eine nach vorne gerichtete Lage verschwenkt wird. Eine Lösung des mit der Erfindung aufgeworfenen Problems ist mit dieser bekannten Ausführung nicht gegeben.

Die Erfindung wird anhand von sechs schematischen Abbildungen beispielsweise dargestellt und erläutert.
- Figur 1: zeigt ein 8-reihiges Maiserntegerät in Arbeitsstellung in Draufsicht.
- Figur 2: zeigt das gleiche Gerät in einer Zwischenstellung zwischen Arbeits- und Transportstellung.
- Figur 3: zeigt das gleiche Gerät in Transportstellung.
- Figur 4: zeigt den Gegenstand von Figur 3 in Seitenansicht.
- Figur 5: zeigt den Gegenstand von Figur 2 im Ausschnitt in etwas vergrößertem Maßstab.
- Figur 6: zeigt einen Teilausschnitt des Gegenstandes von Figur 5 in Richtung des Pfeiles X.

Ein Maiserntegerät zum Anbau an einen nicht dargestellten Feldhäcksler hat als tragendes Element eine Einzugswanne (1) mit einer Querförderschnecke (2), die das vom Boden abgeschnittene und eingeförderte Erntegut einem Schacht (3) zuführt. An dem in Fahrtrichtung vorderen Rahmenbalken (4) der Einzugswanne (1) sind vier Förderkanäle (5, 5', 5'', 5''') fest angebaut. Sie bestehen im wesentlichen aus umlaufenden Schneidmessern (6), paarig angeordneten Förderketten (7) und Abteilerblechen (8).

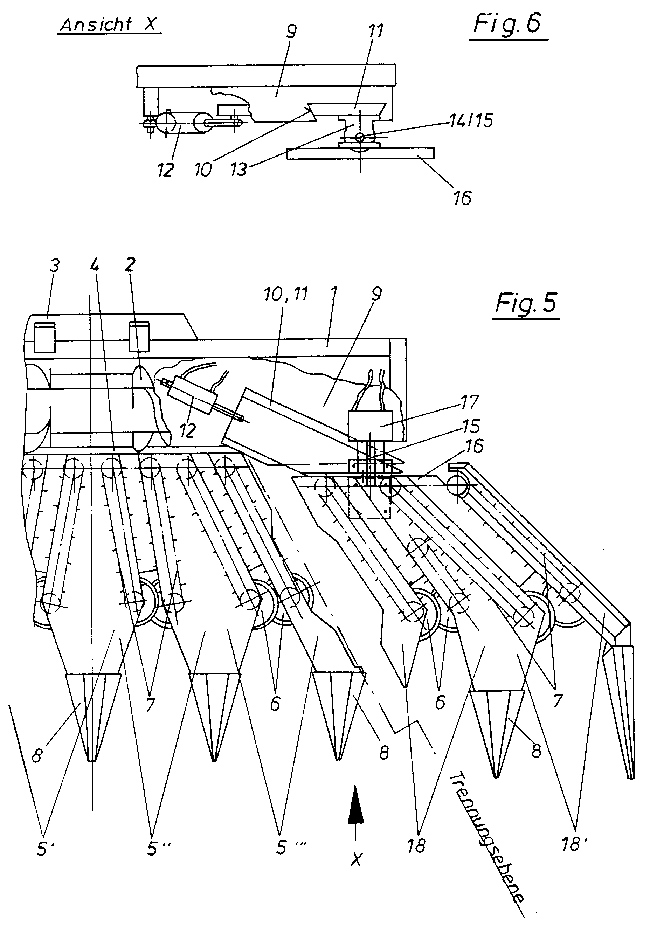

An einem festen Rahmenteil (9) der Einzugswanne (1) (Figuren 5 und 6) befinden sich nahe ihrem Ende eine schräg zur Fahrtrichtung verlaufende Führungsnut (10), in der ein Schlitten (11) längs verschiebbar gelagert ist. Der Schlitten (11) kann mit einem hydraulischen Hubzylinder (12) in der Führungsnut (10) längsbewegt werden. Am freien Ende des Schlittens (11) befindet sich an seiner Unterseite ein Lagerkopf (13) mit einer in Fahrtrichtung liegenden Bohrung (14). In der Bohrung (14) ist ein Zapfen (15) drehbar gelagert, der seinerseits mit einem Hilfsrahmen (16) fest verbunden ist. Der Zapfen (15) und mit ihm der Hilfsrahmen (16) können mittels eines hydraulischen Stellmotors (17) verschwenkt werden. Am Hilfsrahmen (16) sind zwei Förderkanäle (18, 18') fest angebaut. Sie sind ähnlich aufgebaut wie die fest angebauten Förderkanäle (5, 5', 5'', 5''').

Anstelle an der Schlittenführung (10, 11) können die Hilfsrahmen (16) auch an Parallelogramm-Lenkern (19) oder dergleichen schwenkbar gelagert werden, wie in Figur (2) (links) angedeutet ist.

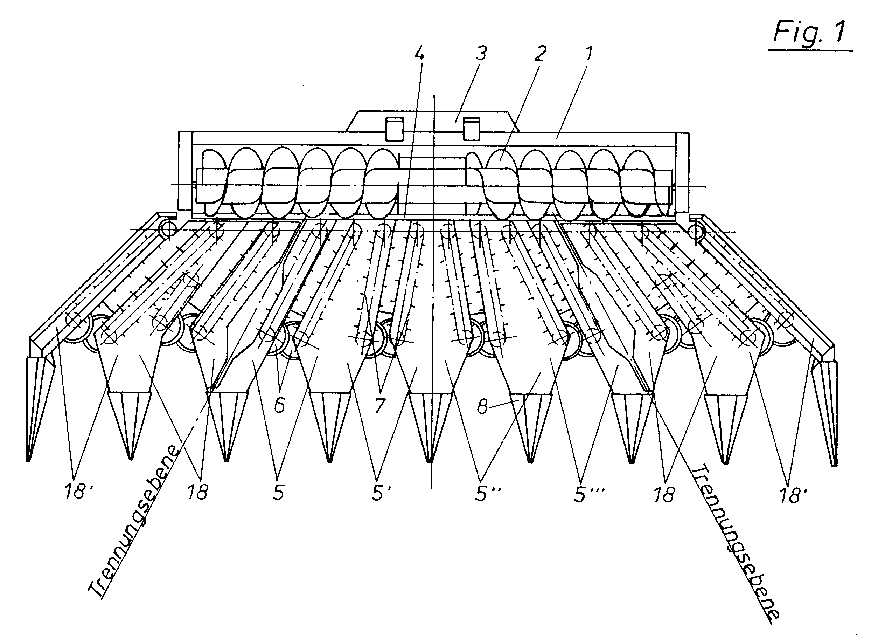

In der Arbeitsstellung liegen alle Förderkanäle (5, 5', 5'', 5''', 18, 18') so aneinandergereiht, wie in Figur 1 gezeigt. Die Schlittenführungen (10, 11) sind so weit zusammengeschoben, daß der Rahmenbalken (4) und die Hilfsrahmen (16) in einer Flucht liegen. In dieser Lage können die Förderkanäle (5, 5', 5'', 5''', 18, 18') je eine Reihe Mais aufnehmen und ernten.

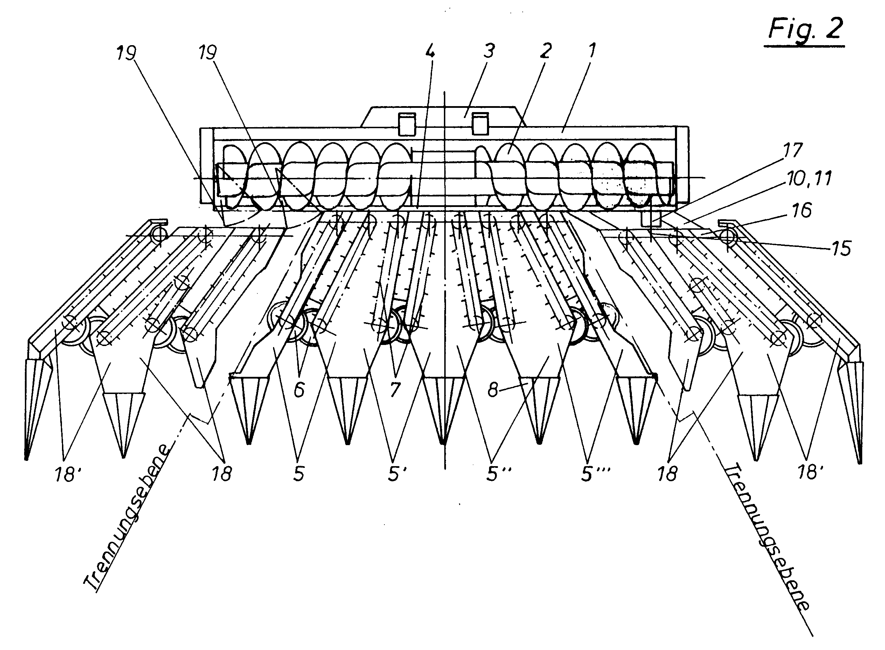

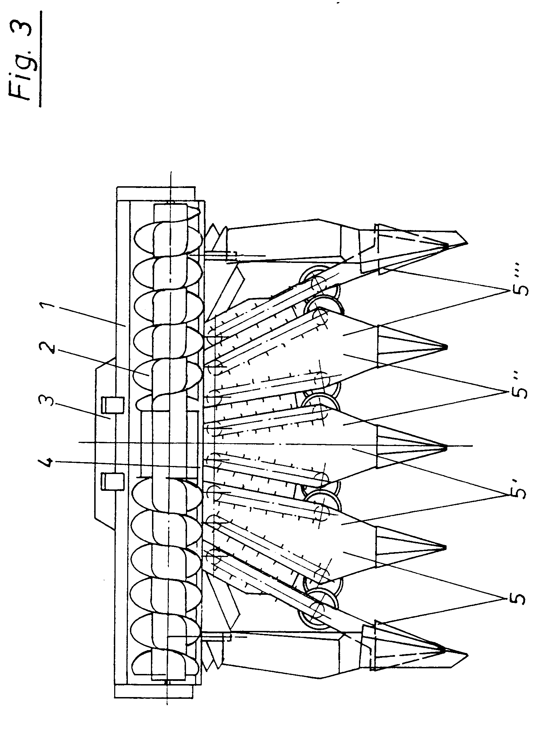

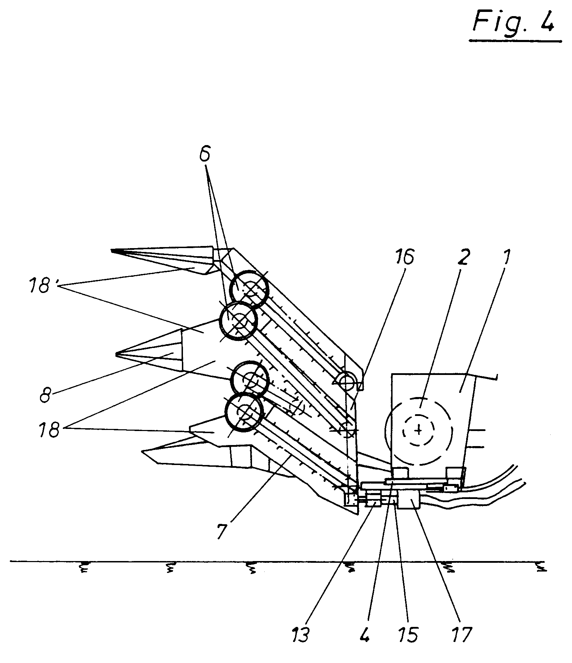

Um die äußeren Förderkanäle (18, 18') in die Transportstellung bringen zu können, werden die Schlitten (11) mittels der Hubzylinder (12) so weit nach außen und vorne verschoben, daß die Hilfsrahmen (16) und mit Ihnen die Förderkanäle (18, 18') eine Lage einnehmen, wie in den Figuren 2 und 5 dargestellt. Zwischen einem feststehenden Förderkanal (5) bzw. (5''') und einem verklappbaren Förderkanal (18) besteht jetzt ein erheblicher Abstand. Dieser erlaubt, die Hilfsrahmen (16) samt den daran befestigten Förderkanälen (18, 18') mittels des Stellmotors (17) so weit zu verschwenken, daß sie eine etwa senkrechte Stellung einnehmen (Figuren 3, 4). Die Transportbreite ist jetzt nicht größer, als die Breite der Einzugswanne (1).

Beim Ablassen der äußeren Förderkanäle (18, 18') in die Arbeitsstellung wird sinngemäß umgekehrt verfahren. Es wird dabei Sorge getragen, daß sich in der Endlage die Hilfsrahmen (16) durch bekannte und deshalb nicht dargestellte Mittel mit einem Bauteil der Einzugswanne (1) verriegeln.

Der Antrieb der umlaufenden Schneidmesser (6) und der Förderketten (7) in den Förderkanälen (5, 5', 5'', 5''', 18, 18') sowie die Trennung und Koppelung der Antriebe für die äußeren verschwenkbaren Förderkanäle (18, 18') können in ähnlicher Weise erfolgen, wie beispielsweise in der DE-PS 32 33 122 beschrieben ist.

## Patentansprüche

1. Maiserntegerät für Feldhäcksler mit mindestens 6 Förderkanälen (18, 5), die an einer eine Querförderschnecke (2) tragenden Einzugswanne (1) gelagert sind, und von denen mindestens die beiden äußeren Förderkanäle (18) zur Erzielung einer kleineren Transportbreite hochklappbar sind, dadurch gekennzeichnet, daß der oder die hochklappbaren Förderkanäle (18, 18') oder Teile der hochklappbaren Förderkanäle (18) und gegebenenfalls die mit diesen mitverschwenkbaren Förderkanäle (18') an Hilfsrahmen (16) gelagert sind, die ihrerseits über eine nach außen verlaufende Schlittenführung (10, 11) mit der Einzugswanne (1) verbunden sind.

2. Maiserntegerät nach Anspruch 1, dadurch gekennzeichnet, daß die, die hochklappbaren Förderkanäle (18, 18') oder Teile der hochklappbaren Förderkanäle (18) und gegebenenfalls die mit diesen mitverschwenkbaren Förderkanäle (18') tragenden Hilfsrahmen (16) um Drehachsen (15) relativ zu den Schlittenführungen (10, 11) verschwenkbar sind.

3. Maiserntegerät nach den Ansprüchen 1 und 2, dadurch gekennzeichnet, daß sich die Hilfsrahmen (16) beim Verschwenken aus der Arbeitsstellung in die Transportstellung und beim Zurückschwenken in die Arbeitsstellung in an sich bekannter Weise selbsttätig gegenüber einem Bauteil der Einzugswanne (1) entriegeln, bzw. verriegeln.

4. Maiserntegerät nach den Ansprüchen 1 - 3, dadurch gekennzeichnet, daß die Verschiebung der Hilfsrahmen (16) relativ zu der Einzugswanne (1) und das Verschwenken der Hilfsrahmen (16) in die Transport- bzw. die Arbeitsstellung in an sich bekannter Weise durch hydraulische Stellglieder (12, 17) bewirkt wird.

5. Maiserntegerät nach Anspruch 1, dadurch gekennzeichnet, daß mehr als sechs Förderkanäle (5, 5', 5'', 5''', 18, 18') vorgesehen sind, von denen zumindest auf einer Endseite der Einzugswanne (1) zwei äußere Förderkanäle (18, 18') um eine Achse (15) hochschwenk- und feststellbar sind.

## Claims

1. A corn harvesting apparatus for a forage harvester comprising at least six conveyor passages (18, 5) which are mounted on a feed trough (1) carrying a transverse conveyor screw (2) and of which at least the two outer conveyor passages (18) are pivotable upwardly to provide a smaller transportation width, characterised in that the upwardly pivotable conveyor passage or passages (18, 18') or parts of the upwardly pivotable conveyor passages (18) and possibly the conveyor passages (18') which are also pivotable with them are mounted on auxiliary frames (16) which in turn are connected to the feed trough (1) by way of an outwardly extending slider guide (10, 11).

2. A corn harvesting apparatus according to claim 1 characterised in that the auxiliary frames (16) carrying the upwardly pivotable conveyor passages (18, 18') or parts of the upwardly pivotable conveyor passages (18) and possibly the conveyor passages (18') which are also pivotable with them are pivotable about axes of rotation (15) relative to the slider guides (10, 11).

3. A corn harvesting apparatus according to claims 1 and 2 characterised in that the auxiliary frames (16) are unlocked and locked automatically relative to a component of the feed trough (1) upon being pivoted out of the working position into the transport position and upon being pivoted back into the working position respectively in per se known manner.

4. A corn harvesting apparatus according to claims 1 to 3 characterised in that the displacement of the auxiliary frames (16) relative to the feed trough (1) and the pivotal movement of the auxiliary frames (16) into the transport and the working positions respectively is produced in per se known manner by hydraulic control members (12, 17).

5. A corn harvesting apparatus according to claim 1 characterised in that there are provided more than six conveyor passages (5, 5', 5'', 5''', 18, 18') of which at least at one end of the feed trough (1) two outer conveyor passages (18, 18') are upwardly pivotable and lockable about an axis (15).

## Revendications

1. Appareil de moissonnage du maïs pour ramasseuse-hacheuse comportant au moins six canaux d'entraînement (18,5), qui sont montés sur une cuve de chargement (1) qui porte une vis convoyeuse transversale (2), et parmi lesquels au moins les deux canaux extérieurs d'entraînement (18) peuvent être rabattus vers le haut pour l'obtention d'une largeur de transport réduite, caractérisé en ce que le ou les canaux d'entraînement rabattables vers le haut (18,18') ou des parties des canaux d'entraînement (18) rabattables vers le haut et éventuellement les canaux d'entraînement (18') pouvant basculer conjointement avec ces canaux d'entraînement rabattables sont tourillonnés sur des cadres auxiliaires (16) qui, pour leur part, sont reliés à la cuve de chargement (1) par l'intermédiaire d'un guide de chariot (10,11) qui s'étend vers l'extérieur.

2. Appareil de moissonnage du maïs selon la revendication 1, caractérisé en ce que les cadres auxiliaires (16), qui portent les canaux d'entraînement (18, 18') rabattables vers le haut ou des parties des canaux d'entraînement (18) rabattables vers le haut et éventuellement les canaux d'entraînement (18') pouvant basculer conjointement avec ces canaux d'entraînement rahattables peuvent basculer autour d'axes de rotation (15) par rapport aux guides de chariot (10,11).

3. Appareil de moissonnage du maïs selon les revendications 1 et 2, caractérisé en ce que les cadres auxiliaires (16) se déverrouillent ou se verrouillent automatiquement, de façon connue en soi, par rapport à un composant de la cuve de chargement (1), lors du basculement depuis la position de travail dans la position de transport et lors du basculement inverse dans la position de travail.

4. Appareil de moissonnage du maïs selon les revendications 1-3, caractérisé en ce que le déplacement des cadres auxiliaires (16) par rapport à la cuve de chargement (1) et le basculement des cadres auxiliaires (16) dans la position de transport ou dans la position de travail sont exécutés de façon connue en soi par des organes de réglage hydrauliques (12,17).

5. Appareil de moissonnage du maïs selon la revendication 1, caractérisé en ce qu'il est prévu plus de six canaux d'entraînement (5,5',5'',5''',18,18'), parmi lesquels, au moins sur un côté d'extrémité de la cuve de chargement (1), deux canaux extérieurs d'entraînement (18, 18') peuvent basculer vers le haut et peuvent être bloqués fermement autour d'un axe (15).
